# EUROPEAN PATENT SPECIFICATION

(11) **EP 1 056 531 B1**
(45) Date of publication and mention of the grant of the patent: **04.06.2003**
(21) Application number: 99905008.1
(22) Date of filing: 10.02.1999
(51) Int. Cl.: B01D 53/94, B01J 37/02

(54) **EXHAUST GAS CATALYST FOR TWO-STROKE ENGINES**
KATALYSATOR ZUR ABGASBEHANDLUNG BEI ZWEITAKTMOTOREN
CATALYSEUR DE GAZ D'ECHAPPEMENT POUVANT EQUIPER DES MOTEURS A DEUX TEMPS

(30) Priority: 20.02.1998 GB 9803554
(43) Date of publication of application: 06.12.2000
(73) Proprietor: JOHNSON MATTHEY PUBLIC LIMITED COMPANY, London SW1Y 5BQ (GB)
(72) Inventor: Cox, Julian Peter, Caversham, Reading RG4 6RT (GB); Evans, Julia Margaret, Wallingford, Oxon OX10 0TD (GB)
(74) Representative: Wishart, Ian Carmichael
(86) International application number: PCT/GB99/00419
(87) International publication number: WO 99/042202

(56) References cited:
- DE-A- 3 729 683
- US-A- 5 208 206
- US-A- 5 427 989
- PATENT ABSTRACTS OF JAPAN vol. 013, no. 372 (C-627), 17 August 1989 & JP 01 127044 A (TOYOTA CENTRAL RES & DEV LAB INC;OTHERS: 01), 19 May 1989

## Description

The present invention concerns improvements in automotive catalysts, and more especially it concerns improvements in catalysts suitable for two-stroke engines such as motorcycle engines and like engines.

In many parts of the world, major automotive atmospheric pollution is caused by motor cycle engines, used either for motorcycles as such, which term is intended to include scooters and mopeds, or as engines for small people- or goods-carriers, such as three-wheelers. The most challenging problem is to deal with exhaust emissions from two-stroke engines. Such engines are generally tuned to run lean for fuel economy but the exhaust gases contain high amounts of unburnt hydrocarbons. Such engines are prone to mis-firing, especially if not very well maintained. Conventional automotive catalytic convertors have been found to be unable to deal with the very high levels of hydrocarbon (HC) emissions, and tend to burn out or melt as catalytic oxidation generates temperatures well in excess of 1000°C, sometimes approaching 2000°C. In fact, no catalyst substrate is capable of withstanding such temperatures. There is therefore a great demand for a solution to this problem.

It appears that there have been suggestions to provide certain top or "over" coatings on conventional catalytic convertors to act as a reactant layer or diffusion barrier to prevent poisoning of the catalytic convertor or to prevent the reaction of sulphur-containing fuel components in diesel fuels. We do not believe that the present invention has previously been conceived.

DE-A-3729683 describes a device for aftertreatment of the exhaust gases of small two-stroke spark ignition engines with a filter element as carrier for a catalytic converter made from at least two metal oxides. The substrate can be ceramic, metal-foam, metal mesh, honeycomb e.g. Fe-Cr-Al alloy; and the catalytic active substance, which can be one or more metal oxides of Cu, Fe, Mn, Co, Cr together with an activator such as KCO₃, can be adhered to the substrate using a composition of vanadium pentoxide or aluminium oxide gel.

US-A-5,208,206 describes a process for making an exhaust gas purification catalyst which is capable of tightly bonding alumina layers on the surface of a metallic carrier in a simple way. A substrate can be coated with a first layer of a hydrated alumina and then a second layer of a gamma alumina. The resulting substrate may then be dipped into solutions of catalytic metals such as Pt and Rh and then calcined. The substrate so obtained may be over-coated with cerium oxide and hydrated alumina.

US-A-5,427,989 describes a catalyst for the purification of exhaust gas comprising a first coating layer of activated alumina containing at least one of Pt, Pd and Rh, a second coating layer of activated alumina containing no noble metal and third coating layer of zeolite ion-exchanged with Cu or Co. The purpose of the second layer is to insulate heat of oxidation reaction induced in the first coating layer to prevent temperature rising in the third coating layer during engine aging treatment and hence control the deterioration or durability. Also it functions to control the deterioration of the purification performance due to the movement of Cu or Co as an active ingredient in the third coating layer from active sites on the zeolite to the first coating layer through the engine aging treatment.

JP-A-01127044 describes a catalyst for purification of, among others, hydrocarbons in a lean burn atmosphere. The catalyst comprises a carrier (porous sintered body such as cordierite, alumina, silica-alumina, spodumene), a first coating with catalyst active substances for oxidation reaction (noble metals supported on alumina), and a further coating with a catalyst layer composed of copper and zeolite.

According to one aspect, the present invention provides a two-stroke gasoline engine comprising an exhaust gas emission control system for reducing hydrocarbon oxidation, said system comprising a refractory metal honeycomb substrate, a platinum group metal-based catalyst distributed on the substrate and a refractory material coated on said catalyst for reducing diffusion of unburnt hydrocarbons from the exhaust gas to the catalyst, wherein the refractory material consists of high surface area alumina or a natural or synthetic zeolite.

According to a further aspect, the invention provides a motorcycle or three-wheeled vehicle comprising an engine according to the invention.

The invention further provides a method of reducing hydrocarbon oxidation in the exhaust system of a two-stroke gasoline engine, comprising passing exhaust gases over a catalytic convertor, wherein the catalytic convertor comprises a refractory metal honeycomb substrate, a platinum group metal-based catalyst distributed on the substrate and a refractory material coated on said catalyst for reducing diffusion of unburnt hydrocarbons from the exhaust gas to the catalyst.

The refractory material coating, must not, of course, act as a complete barrier to hydrocarbons, although it may be desirable to use molecular sieve materials which are capable of preventing access of large molecules, such as from lubricating oil, to the catalyst layer. It is well known in automotive catalyst manufacture to use a washcoat comprising a slurry of fine alumina particles deposited onto the substrate, in order to extend the effective surface area available for deposit of the catalytic layer. Essentially similar technology may be used to apply the refractory material coating according to the present invention. Using an alumina washcoat formulation, suitable coating thicknesses may be expressed in loading terms as from about 0.5g/in³ (30.5gl⁻¹) to about 1.2g/in³ (73.2gl⁻¹) of catalyst volume for a conventional metal honeycomb support

The catalyst is suitably platinum-based, for example containing 40-60g Pt/ft³ (1.4-2.1 gl⁻¹) of catalyst volume. Other components or promoters, such as rhodium or other precious or base metals, may be incorporated into the catalyst. Suitable metal substrates are commercially available and may be that known as Fecralloy. Desirably, it has 200 or lower, *eg* 100 or lower cells per sq in (31 cell/cm² or 15.5 cells/cm²). Desirably, the substrate is provided with a washcoat layer of alumina, which may contain other components such as ceria or zirconia-stabilised ceria.

In general, it is envisaged that the catalyst will be located within the silencer box, and is desirably spaced from the box by an insulating air space to ensure that surface temperatures do not become excessive or dangerous.

The present invention provides, therefore, a catalyst system that prevents peaks of excess HC reaching the catalyst, yet retains the required light-off performance. An alternative approach, of reducing precious metal loading on the catalyst, would reduce sensitivity to overload conditions but would increase light-off temperature so that the catalyst would not operate well when cold, upon start-up and when combined with the generally low exhaust gas temperatures from two-stroke engines, the catalyst may not be able to sustain operating temperatures above light-off. Desirably, the catalyst of the present invention, incorporating the refractory material coating is effective to convert about 30wt% to about 45wt% of hydrocarbons at a catalyst inlet temperature of about 320°C and under typical space velocities.

A further advantage resulting from the present invention is that the refractory material coating in its preferred embodiments prevents or slows the poisoning of the catalyst surface caused by engine oil components, eg phosphorus, or arising from poor quality fuel, but these are advantages and not the primary purpose of the invention.

The present invention is illustrated by comparing the performance of a conventional exhaust gas catalyst carrying 40g/ft³ (1.4gl⁻¹) of a precious metal mixture of Pt/Rh in a 18:1 wt ratio, on a 100 cells/sq in (200 cells cm⁻²) Fecralloy metal substrate. The catalyst is 33mm diameter and 75.4mm length and is mounted in the silencer of a 125cc two-stroke motorcycle engine, the catalyst being surrounded by a 15mm air jacket. The catalyst was assessed over the Indian Drive Cycle test, and demonstrated 60% conversion of hydrocarbons. Road tests showed that the catalysts were becoming hot enough to melt the metal substrate (Fecralloy has an upper temperature limit of 1250°C). We assessed that this was because mis-fires during road running were causing large quantities of unburnt hydrocarbons to reach the catalyst and the exotherm was causing rapid heating of the catalyst. Mathematical modelling of this system indicates that even under perfect running, the metal monolith temperature quickly attained the upper temperature limit of 1250°C, but did not exceed it, at 60% conversion. Under a mis-fire condition, if 60% conversions were still attained, monolith temperatures reached in excess of 1900°C within a second or two.

Further samples of catalyst were prepared by depositing differing quantities of standard washcoat alumina onto the identical catalyst, and firing at 500°C. A coating of 0.5g/in³ (30.5gl⁻¹) alumina reduces hydrocarbon conversions from 60% to about 40%. Modelling indicates that the maximum temperature under mis-fire conditions is reduced by 400°C. A thicker coating, of 1.2g/in³ (73.2gl⁻¹) alumina, lowers the maximum conversion to 28% and lowers the maximum temperature to below the substrate upper temperature limit.

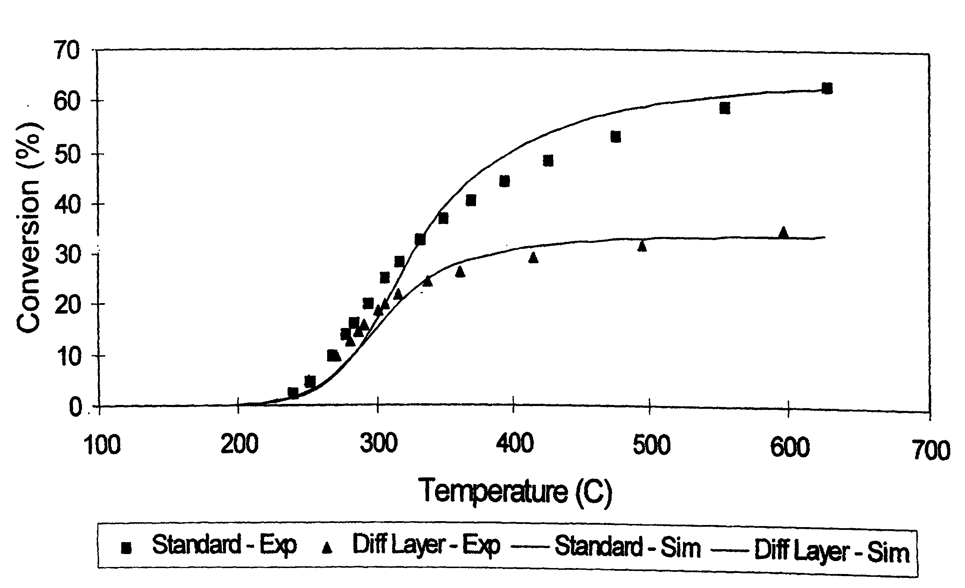

The Figure attached is a plot of experimental and modelled ("Sim") results for conversion of methane against gas temperature at the inlet for the conventional and for the diffusion barrier-coated catalysts.

It will readily be understood that the principles of the present invention may be used to develop different examples of coated catalysts. In particular, the initial work has been carried out using alumina only; whilst this is inexpensive and easy to carry out, it may be expected that alternative or modified materials may be developed. It should further be understood that catalyst activity may be controlled additionally in a number of different ways, whilst still retaining the principles of the present invention. For example, the catalyst activity may be adjusted by altering the loading, altering the length of the monolithic support, changing the dimensions of the monolithic support channels and/or by catalyst gradients in any dimension.

## Claims

1. A two-stroke gasoline engine comprising an exhaust gas emission control system for reducing hydrocarbon oxidation, said system comprising a refractory metal honeycomb substrate, a platinum group metal-based catalyst distributed on the substrate and a refractory material coated on said catalyst for reducing diffusion of unburnt hydrocarbons from the exhaust gas to the catalyst, wherein the refractory material consists of high surface area alumina or a natural or synthetic zeolite.

2. An engine according to claim 1, wherein the refractory material coating is effective to reduce hydrocarbon oxidation to from 30 to 45wt% of hydrocarbons at a catalyst inlet temperature of about 320°C and at typical space velocities.

3. An engine according to claim 1 or 2, wherein the refractory material coating is high surface area alumina deposited at 0.5g to 1.2g/in³ (0.03 to 0.07g/cc) of catalyst volume.

4. A motorcycle or three-wheeled vehicle comprising an engine according to any preceding claim.

5. A method of reducing hydrocarbon oxidation in the exhaust system of a two-stroke gasoline engine, comprising passing exhaust gases over a catalytic convertor, wherein the catalytic convertor comprises a refractory metal honeycomb substrate, a platinum group metal-based catalyst distributed on the substrate and a refractory material coated on said catalyst for reducing diffusion of unburnt hydrocarbons from the exhaust gas to the catalyst.

6. A method according to claim 5, wherein the refractory material is effective to reduce the oxidation of hydrocarbons to from 30 to 45wt% of the hydrocarbons in the exhaust gas at a catalyst inlet temperature of about 320°C and at typical space velocities.

## Patentansprüche

1. Zwei-Takt-Benzinmotor, der ein Abgas-Emissions-Kontrollsystem für die Verringerung der Kohlenwasserstoffoxidation aufweist, wobei das System umfasst ein Wabenkörper-Substrat aus einem feuerfesten Metall, einen auf dem Substrat verteilten Katalysator auf Basis eines Metalls der Platingruppe und einen Überzug aus einem feuerfesten Material auf diesem Katalysator zur Verminderung der Diffusion von unverbrannten Kohlenwasserstoffen aus dem Abgas in den Katalysator, wobei das feuerfeste Material besteht aus Aluminiumoxid mit einer großen spezifischen Oberfläche oder einem natürlichen oder synthetischen Zeolithen.

2. Motor nach Anspruch 1, wobei der Überzug aus dem feuerfesten Material wirksam ist zur Verminderung der Kohlenwasserstoffoxidation auf 30 bis 45 Gew.-% der Kohlenwsserstoffe in dem Abgas bei einer Katalysator-Einlasstemperatur von erwa 320 °C und typischen Raumgeschwindigkeiten.

3. Motor nach Anspruch 1 oder 2, worin der Überzug aus feuerfestem Material besteht aus Aluminiumoxid mit großer spezifischer Oberfläche, das in einer Menge von 0,03 bis 0,07 g/cm³ (0,5 - 1,2 g/in³) Katalysatorvolumen abgeschieden ist.

4. Motorrad oder Dreirad-Fahrzeug, das einen Motor nach einem vorhergehenden Anspruch umfasst.

5. Verfahren zur Verringerung der Kohlenwasserstoffoxidation im Abgassystem eines Zwei-Takt-Benzinmotors, das umfasst das Überleiten der Abgase aber einen Abgaskatalysator, wobei der Abgaskatalysator umfasst ein Wabenkörpersubstrat aus einem feuerfesten Metall, einen auf dem Substrat verteilten Katalysator auf Basis eines Metalls der Platingruppe und einen Überzug aus feuerfestern Material auf dem Katalysator zur Verringerung der Diffusion von unverbrannten Kohlenwasserstoffen aus dem Abgas in den Katalysator.

6. Verfahren nach Anspruch 5, worin das feuerfeste Material wirksam ist zur Verminderung der Oxidation von Kohlenwasserstoffen auf 30 bis 45 Gew.-% der Kohlenwasserstoffe in dem Abgas bei einer Katalysator-Einlasstemperatur von etwa 320 °C und typischen Raumgeschwindigkeiten.

## Revendications

1. Moteur à essence à deux temps comprenant un système de contrôle d'émission de gaz d'échappement pour réduire l'oxydation d'hydrocarbures, ledit système comprenant un substrat de radiateur à nids d'abeille en métal réfractaire, un catalyseur basé sur le groupe métal du platine réparti sur le substrat et un matériau réfractaire revêtu sur ledit catalyseur pour réduire la diffusion des hydrocarbures imbrûlés à partir des gaz d'échappement vers le catalyseur, dans lequel un matériau réfractaire consiste en de l'alumine à surface élevée ou une zéolithe naturelle ou synthétique.

2. Moteur selon la revendication 1, dans lequel le matériau réfractaire est efficace pour réduire l'oxydation d'hydrocarbures de 30 à 45 % en poids d'hydrocarbures à une température d'entrée de catalyseur d'environ 320°C et à des vitesses spatiales typiques.

3. Moteur selon la revendication 1 ou 2, dans lequel le revêtement de matériau réfractaire est de l'alumine à surface élevée déposée entre 0,03 et 0,07 g/cm³ (0,5 à 1,2 g/in³) de volume de catalyseur.

4. Vélomoteur ou véhicule à trois roues comprenant un moteur selon l'une quelconque des revendications précédentes.

5. Procédé de réduction d'oxydation d'hydrocarbures dans le système d'échappement d'un moteur à essence à deux temps, consistant à faire passer des gaz d'échappement sur un convertisseur catalytique, dans lequel ledit convertisseur catalytique comprend un substrat de radiateur à nids d'abeille en métal réfractaire, un catalyseur basé sur le groupe métal du platine réparti sur le substrat et un matériau réfractaire revêtu sur ledit catalyseur pour réduire la diffusion des hydrocarbures imbrûlés à partir des gaz d'échappement vers le catalyseur.

6. Procédé selon la revendication 5, dans lequel le matériau réfractaire est efficace pour réduire l'oxydation d'hydrocarbures de 30 à 45 % en poids d'hydrocarbures à une température d'entrée de catalyseur d'environ 320°C et à des vitesses spatiales typiques.
